# EUROPÄISCHE PATENTSCHRIFT

(11) **EP 3 659 791 B1**
(45) Veröffentlichungstag und Bekanntmachung des Hinweises auf die Patenterteilung: **07.12.2022**
(21) Anmeldenummer: 19201588.1
(22) Anmeldetag: 07.10.2019
(51) Int. Cl.: B29D 30/06, B29C 33/10, B22F 3/105, B22F 3/11, B22F 5/00, B22F 7/08, B22F 10/20, B23K 26/34, B23K 26/342, B33Y 10/00, B33Y 80/00

(54) **VERFAHREN ZUR HERSTELLUNG EINES FORMSEGMENTES UND FORMSEGMENT**
METHOD FOR PRODUCING A FORM SEGMENT AND FORM SEGMENT
PROCÉDÉ DE FABRICATION D'UN SEGMENT DE MOULE ET SEGMENT DE MOULE

(30) Priorität: 30.11.2018 DE 102018220659
(43) Veröffentlichungstag der Anmeldung: 03.06.2020
(73) Patentinhaber: Continental Reifen Deutschland GmbH, 30165 Hannover (DE)
(72) Erfinder: Hoppe, Nicholas, 30165 Hannover (DE); Dzick, Jürgen, 30165 Hannover (DE); Blömer, Fabian, 30165 Hannover (DE)
(74) Vertreter: Continental Corporation

(56) Entgegenhaltungen:
- EP-A2- 2 829 338
- WO-A1-2008/028542
- WO-A1-2014/095208
- DE-A1-102004 028 462
- DE-A1-102010 037 785
- US-A1- 2014 147 538
- US-A1- 2016 039 160

## Beschreibung

### Verfahren zur Herstellung eines Formsegmentes und Formsegment

Die Erfindung betrifft ein Verfahren zur Herstellung eines Formsegmentes einer Vulkanisationsform für einen Fahrzeugreifen mit einem profilierten Laufstreifen,
wobei auf einer insbesondere planen Fläche eines durch ein nicht -generatives Fertigungsverfahren vorgefertigten ersten Formsegmentteils mittels eines generativen Fertigungsverfahrens durch Umschmelzen von Metallpulver schichtweise ein weiteres Formsegmentteil aufgebaut und mit dem ersten Formsegmentteil stoffschlüssig verbunden wird,
wobei das weitere Formsegmentteil mitsamt den das Profilnegativ des Laufstreifens des Fahrzeugreifens bildenden Elementen aufgebaut wird,
und wobei das weitere Formsegmentteil mit einer Außenschicht aus vollständig umgeschmolzenem Metallpulver aufgebaut wird, welche einen an den ersten Formsegmentteil angrenzenden Innenbereich von außen umgibt.

Die Erfindung betrifft ferner ein Formsegment einer Vulkanisationsform für einen Fahrzeugreifen aus einem durch ein nicht -generatives Fertigungsverfahren hergestellten, vorgefertigten ersten Formsegmentteil und einem mittels eines generativen Fertigungsverfahrens durch Umschmelzen von Metallpulver schichtweise aufgebauten weiteren Formsegmentteil, welches mit dem ersten Formsegmentteil stoffschlüssig verbunden ist und mit den das Profilnegativ des Laufstreifens des Fahrzeugreifens bildenden Elementen versehen ist,
und wobei das weitere Formsegmentteil eine Außenschicht und einen an den ersten Formsegmentteil angrenzenden Innenbereich aufweist, wobei die Außenschicht aus vollständig umgeschmolzenem Metallpulver besteht und den Innenbereich von außen umgibt.

Bekannter Weise erfolgt die Vulkanisation von Fahrzeugreifen in Heizpressen, bei welchen ein Reifenrohling in eine geeignete Vulkanisationsform eingesetzt und unter Einwirkung von Druck und Temperatur vulkanisiert wird. Die einen Formsegmentring bildenden Formsegmente formen und heizen den Laufstreifen des Reifens und prägen in diesen das Laufstreifenprofil ein. Traditionell werden Formsegmente durch Gussprozesse mit anschließender spanender Bearbeitung oder durch ausschließliche spanende Bearbeitung aus Stahl- oder Aluminiumlegierungen hergestellt.

Es ist bekannt, das komplette Profilnegativ der Formsegmente eines Laufstreifens oder auch einzelne Elemente dieses Profilnegativs, beispielsweise Lamellen oder Rippen, durch generative Fertigungsverfahren, insbesondere durch SLM (Selective Laser-Melting), herzustellen und in traditionell gefertigten Formsegmentteilen zu befestigen bzw. anzuordnen. Der Vorteil von generativen Fertigungsverfahren ist insbesondere in der zeit- und kostengünstigen Erstellung sowie in der Freiheit der Formgestaltung der Formsegmente und deren Bestandteile zu sehen.

Aus der EP 2 709 792 B1 ist ein Verfahren zur Fertigung eines Formgebungselementes, welches insbesondere ein Formsegment ist, für eine Form für einen Luftreifen bekannt, wobei das Formgebungselement ein gesintertes Teil und ein fest mit dem gesinterten Teil verbundenes, nicht gesintertes Teil aufweist. Das gesinterte Teil ist eine Schale, welche einen Kern enthält, der aus einem Stück mit der Schale gefertigt ist und eine Gitterstruktur aufweist, die somit eine Vielzahl von Hohlräumen enthält. Die Hohlräume nehmen weit über die Hälfte des Volumens des Kernes ein. Dabei wird die Schale mitsamt der Gitterstruktur Schicht für Schicht aus geschmolzenem Metallpulver hergestellt. Bei der schichtweisen Bildung dieser Gitterstruktur mit entsprechenden Hohlräumen verbleibt fertigungsbedingt nicht aufgeschmolzenes Metallpulver in den Hohlräumen. Die die Netzstruktur bildenden Gitterteile bestehen aus solidem umgeschmolzenem Material. Der Kern enthält daher große Anteile an mit Luft und Metallpulver gefüllten Hohlräumen, wodurch die Wärmeleitfähigkeit des Formsegmentteils in Vergleich zu einem aus Vollmaterial bestehenden Formsegmentteil deutlich schlechter ist. Die Gitterstruktur soll die mechanische Stabilität verbessern und Eigenspannungen reduzieren, welche während einer spanenden Nachbearbeitung verzugsbedingte Veränderungen der Geometrie des Formsegmentteils verursachen.

Aus der DE 10 2004 028 462 A1 ist ein Formsegment einer Vulkanisationsform eines Fahrzeugluftreifens bekannt, welches einen Grundkörper mit einer dreidimensionalen Gitterstruktur und einen an die dreidimensionale Gitterstruktur angrenzenden Formsegmentteil aufweist. Die dreidimensionale Gitterstruktur wird direkt auf dem Grundkörper aus einem sinterfähigem Pulvermaterial durch ein Laserschmelzverfahren, also durch ein generatives Fertigungsverfahren, erzeugt. Die Gitterstruktur schafft einen Verbund von Hohlräumen, durch welche ein Heizmedium, insbesondere Wasserdampf, geleitet wird. Das Formsegmentteil besteht aus gesintertem Stahlmaterial, welches mittels eines Laserschmelzverfahrens aus pulvrigem Material schichtweise aufgebaut wird und welches über seine gesamte Breite und seinen gesamten Querschnitt verteilte Mikrokanäle und Mikroporen aufweist. Die Mikrokanäle und Mikroporen ermöglichen in Kombination mit der Gitterstruktur und einer zentralen Entlüftungsbohrung eine Entlüftung der Vulkanisationsform. Ein solches Formsegment lässt sich schnell und preiswert herstellen.

Die US 2016/0039160 A1 offenbart ein Formsegment, welches durch ein Laserschmelzverfahren schichtweise aus Metallpulver hergestellt wird. Das Laserschmelzen wird derart ausgeführt, dass das fertige Formsegment einen zwischen seiner Innenfläche und seiner Außenfläche verlaufenden, porösen Entlüftungskanal mit einer Porosität von zumindest 0,2 aufweist.

Der Erfindung liegt die Aufgabe zugrunde, ein Verfahren zur Verfügung zu stellen, welches es gestattet, ein Formsegment mit wesentlich besseren Wärmeleiteigenschaften als jenes mit der Gitterstruktur gemäß der EP 2 709 792 B1 mit hoher Prozessgeschwindigkeit sowie mit in variabler Weise einstellbaren Wärmeleiteigenschaften herstellen zu können, wobei nicht umgeschmolzenes Metallpulver innerhalb des Segmentes zumindest weitgehend vermieden werden soll. Der Erfindung liegt auch die Aufgabe zugrunde, ein Formsegment mit diesen Eigenschaften zur Verfügung zu stellen.

Bezüglich des Verfahrens wird die gestellte Aufgabe erfindungsgemäß dadurch gelöst, dass der Innenbereich zumindest teilweise mit einem Volumenenergieeintrag aufgebaut wird, welcher sich vom Volumenenergieeintrag beim Aufbau der Außenschicht unterscheidet, derart, dass der Innenbereich mit einer Porosität von 0,01 bis 0,5 gebildet wird.

Was das Formsegment betrifft, wird die gestellte Aufgabe erfindungsgemäß dadurch gelöst, dass der Innenbereich eine Porosität von 0,01 bis 0,5 aufweist.

Gemäß der Erfindung wird im umgeschmolzenen Innenbereich eine Porosität eingestellt. Diesbezüglich unterscheidet sich die Erfindung signifikant von jener gemäß der EP 2 709 792 B1, da die Gitterstruktur ausschließlich aus solidem umgeschmolzenem Material mit nicht aufgeschmolzenem Pulver in den Zwischenräumen gebildet wird. Bei der Erfindung "gestattet" das Erzeugen von Porosität im Innenbereich eine hohe Prozessgeschwindigkeit und eine Einflussnahme auf die Wärmeleiteigenschaften, insbesondere in bestimmten Bereichen des Segmentes. Anders als bei einer Gitterstruktur, wie sie aus der EP 2 709 792 B1 bekannt ist, sind bei einer gewollt erzeugten Porosität die geometrische Ausprägung und Gestalt nicht exakt definiert, wenngleich die jeweilige Position durch den Herstellungsprozess gesteuert werden kann. Es lassen sich daher gemäß der Erfindung innerhalb des Segmentes lokal die Wärmeleiteigenschaften gezielt variieren und einstellen. Etwaiges nicht voll umgeschmolzene Pulvermaterial, welches in Folge der beabsichtigten Porosität im Bauteilinneren vorliegt, verbleibt in kleinen abgeschlossenen und sich willkürlich ausbildenden Kavitäten und unterscheidet sich somit von der definierten Durchlässigkeit eines Gitters oder Netzes. Darüber hinaus hat sich herausgestellt, dass ein Großteil des nicht direkt umgeschmolzenen Metallpulvers an den "Wänden" der Poren ansintert und somit einen stoffschlüssigen Verbund mit dem umgebenden Material eingeht.

Gemäß einer bevorzugten Ausführungsform der Erfindung wird der Innenbereich zumindest teilweise mit einem geringeren Volumenenergieeintrag als die Außenschicht aufgebaut. Diese Maßnahme ermöglicht eine besonders gute Einstellung der Porosität im erwünschten Bereich von 0,01 bis 0,5 im Innenbereich. Bei dieser Verfahrensvariante ist das Erzeugen von Stellen höherer Porosität mit einer Erhöhung der Prozessgeschwindigkeit erzielbar, der aufzuwendende und Porosität bewirkende geringere Volumenenergieeintrag wird auf einfache Weise beispielsweise durch eine Erhöhung der Manipulationsgeschwindigkeit des Laserstrahls der Vorrichtung erreicht. Durch die lokal geringeren Energieeinträge werden auch Eigenspannungen im Bauteilinneren reduziert.

Bei einer alternativen Ausführungsform wird der Innenbereich zumindest teilweise mit einem höheren Volumenenergieeintrag als die Außenschicht aufgebaut. Wählt man etwa eine Druckstrategie, bei welcher der Innenbereich nicht in jeder Schicht umgeschmolzen wird, sondern beispielswiese nur nach jedem vierten Beschichtungsvorgang, muss eine größere Menge Pulver auf- und umgeschmolzen werden. Die dafür hohe einzutragende, physikalisch gedeckelte Energiemenge erzeugt ein großes Schmelzbad, bei dessen Erstarrung es zu Einschlüssen von Gasen kommt. Dazu kommt eine Schmelzbaddynamik, welche bei der Erstarrung der Schmelze die Bildung von Einschlüssen begünstigt. Die Leistung, etwa des Lasers, und somit der theoretische Energieeintrag lassen sich größer wählen als die von der Pulveroberfläche maximal zu absorbierende Energie. Somit eignet sich grundsätzlich auch ein großer Energieeintrag zur Erzeugung von Porosität im erwünschten Bereich.

Bei einer weiteren, besonders bevorzugten und einfach herzustellenden Ausführung wird der Innenbereich mit in stochastischer Homogenität verteilten Poren aufgebaut.

Um loses Metallpulver innerhalb des Innenbereiches weitgehend zu vermeiden, ist es bevorzugt und vorteilhaft, den Innenbereich mit Poren aufzubauen, deren größter Durchmesser ≤ 1,0 mm beträgt.

Bei einer weiteren vorteilhaften Ausführungsvariante des Verfahrens wird der Innenbereich mit Teilbereichen aufgebaut, die sich in ihrer Porosität voneinander unterscheiden. Bereiche unterschiedlicher Porosität weisen vorteilhafter Weise auch unterschiedliche Wärmeleiteigenschaften auf.

Die Wärmeleiteigenschaften des Innenbereiches lassen sich durch das Ausmaß der Porosität besonders gut beeinflussen. Dabei wird bevorzugt der Innenbereich bzw. zumindest ein Teilbereich des Innenbereiches mit einer Porosität ≤ 0,5, insbesondere ≤ 0,3 und vorzugsweise mit einer Porosität ≥ 0,03, vorzugsweise ≥ 0,07 und besonders bevorzugt ≥ 0,1 aufgebaut.

Was die Dicke der Außenschicht betrifft so ist es bevorzugt, wenn diese zumindest an den Seiten- und den Stirnflächen des Formsegmentes in einer Schichtdicke von 0,1 mm bis 3,0 mm aufgebaut wird.

Die Außenschicht überdeckt dabei auch die Elemente des Profilnegativs, sodass diese zumindest zum Teil aus solidem Material aufgebaut werden. Dabei kann bei einer bevorzugten Variante vorgesehen sein, dass die Elemente des Profilnegativs zumindest zum Teil derart aufgebaut werden, dass sie jeweils einen Teilbereich des Innenbereiches aufweisen und eine Außenschicht mit einer Schichtdicke von 0,1 mm bis 3,0 mm besitzen.

Bevorzugt wird ferner die Außenschicht an der die Elemente des Profilnegativs aufweisenden Innenfläche und in den Bereichen zwischen den Elementen des Profilnegativs mit einer Schichtdicke von 0,1 mm bis 3,0 mm aufgebaut.

Zweckmäßig ist es, wenn das erste Formsegmentteil derart vorgefertigt wird, dass dieses die Form einer rechteckigen Platte oder die Form eines konturnahen Segmentrückens oder die Endkontur eines Segmentrückens aufweist, wobei auf der dem Segmentrücken gegenüberliegenden Fläche das weitere Formsegmentteil aufgebracht wird, wobei das erste Formsegmentteil bei Form einer rechteckigen Platte oder bei konturnaher Form des Segmentrückens zum Erhalt der Endkontur des Segmentrückens nachbearbeitet wird.

Hierdurch ist die Erstellung eines die Endkontur des Segmentrückens aufweisenden ersten Formsegmentteiles zeitlich und räumlich unabhängig und trennbar von dem generativen Aufbau des weiteren Formsegmentteiles.

In einer bestimmten Ausführung führt man die dem Segmentrücken gegenüberliegende Fläche des ersten Formsegmentteiles plan aus und man bringt das weitere Formsegmentteil auf die plane Fläche auf. Eine plane Oberfläche ist nach jetzigem Stand der Technik für das generative Fertigungsverfahren des Pulverbetts basierten Laserschmelzverfahrens notwendig. Dieses Verfahren ist beispielsweise unter der Bezeichnung "Selective Laser Melting" bekannt.

Zweckmäßig ist es, wenn das Volumen des mittels generativer Verfahren erzeugten Formsegmentteiles etwa gleich groß oder größer als das Volumen des in Endkontur befindlichen ersten Formsegmentteiles ist.

Bevorzugt wird das Formsegment spanend nachbearbeitet und/oder einem Wärme- und Oberflächenbehandlungsverfahren unterzogen. Dadurch können Material- und Oberflächeneigenschaften eingestellt und minimale Formtoleranzen eingehalten werden.

Als generatives Verfahren eignet sich insbesondere zumindest eines der Verfahren aus der Gruppe Laserschmelzverfahren, Sinterverfahren, Auftragsschweißverfahren und sonstige Schmelzverfahren.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Schnittdarstellung eines Teils einer Reifenvulkanisationsform im geschlossenen Zustand,
Fig. 2 eine Ansicht eines Formsegmentes,
Fig. 3 einen Segmentring aus Formsegmenten und
Fig. 4 einen radialen Schnitt (Querschnitt) eines hergestellten Formsegmentes.

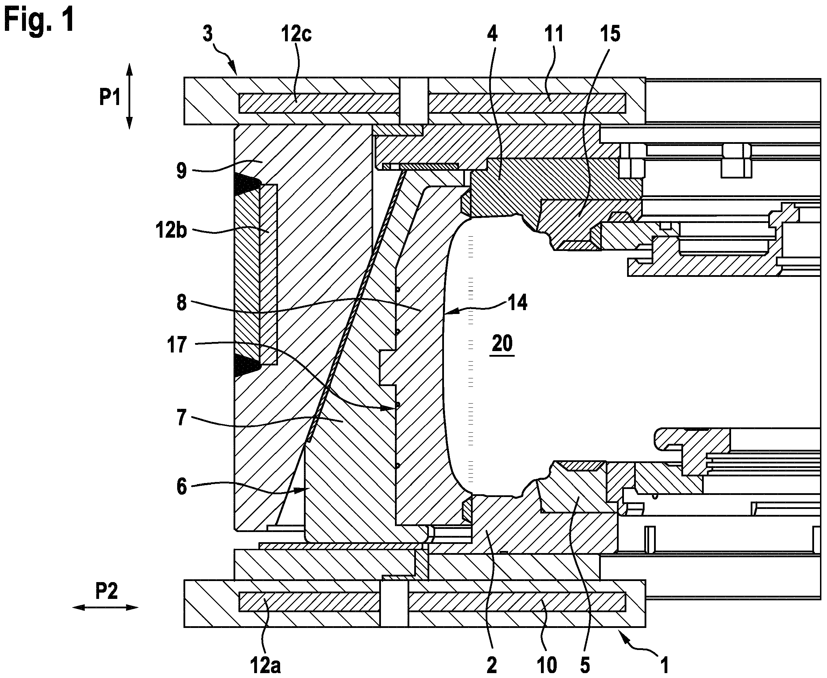

Fig. 1 zeigt schematisch die wesentlichen Bestandteile einer üblichen Vulkanisationsform für einen Fahrzeugluftreifen für Personenkraftwagen. Die Vulkanisationsform befindet sich innerhalb einer Heizpresse, deren Bestandteile nicht dargestellt sind und welche üblicherweise ein Pressenoberteil sowie ein Pressenunterteil und die entsprechenden Mechanismen zum Positionieren des zu vulkanisierenden Reifens, zur Betätigung der Bestandteile der Vulkanisationsform, zum Einbringen der Heizmedien und zum Entfernen des fertig vulkanisierten Reifens aufweist.

Die in Fig. 1 schematisch dargestellte Vulkanisationsform ist eine mehrteilige Containerform mit einer unteren Heizplatte 1, einer unteren Seitenwandschale 2, einer oberen Heizplatte 3, einer oberen Seitenwandschale 4, einem unteren Wulstring 5 und einem oberen Wulstring 15. Zu jenen Bestandteilen der Vulkanisationsform, die zum Öffnen und Schließen in axialer Richtung (Doppelpfeil Pi) bewegt werden, gehören die obere Heizplatte 3 mit der an dieser angeordneten oberen Seitenwandschale 4. Die Vulkanisationsform weist ferner einen Segmentring 6 auf, welcher üblicherweise aus 7 bis 14 ringförmig verlaufenden Segmentschuhen 7 zusammengesetzt ist, welche die formgebenden Formsegmente 8 in gleicher Anzahl halten. Bei Sonderformenbau kann die Anzahl der Formsegmente auch bis zu 120 betragen. Die Segmentschuhe 7 werden beim Öffnen und Schließen der Vulkanisationsform in radialer Richtung (Doppelpfeil P₂ in Fig. 1) auseinandergefahren, umschließen beim Schließen den zu vulkanisierenden Reifen und geben nach der Vulkanisation den fertig vulkanisierten Reifen frei. An der Innenseite des in Fig. 1 gezeigten Segmentschuhs 7 ist eines der Formsegmente 8 erkennbar, welches den profilierten Laufstreifen des Reifens formt. An der oberen Heizplatte 3 ist ein Schließring 9 angeordnet, welcher eine abgeschrägte Innenfläche aufweist, die mit abgeschrägten Außenflächen der Segmentschuhe 7 des Segmentringes 6 derart zusammenwirken, dass beim Schließen der Vulkanisationsform die Segmentschuhe 7 in radialer Richtung zum geschlossenen Segmentring 6 zusammengefahren werden. In der unteren Heizplatte 1, der oberen Heizplatte 3 und im Schließring 9 sind Heizkammern 10, 11, 12a, 12b und 12c enthalten, in welche zum Vulkanisieren des Reifens zumindest ein Heizmedium, beispielsweise Sattdampf (Wasserdampf) eingeleitet wird. Auf diese Weise wird der nicht dargestellte Rohreifen von außen über die Segmentschuhe 7, die Seitenwandschalen 2, 4 und die Wulstringe 5, 15 beheizt. Diese Heizung wird üblicherweise als Außenheizung bezeichnet. Es ist ferner eine sogenannte Innenheizung vorgesehen, welche einen üblichen Heizbalg aufweist, welcher nicht dargestellt ist, in bekannter Weise angeordnet ist und zumindest mit einem Heizmedium unter Druck befüllt wird, um den Rohreifen in der Vulkanisationsform von innen her zu zentrieren, wobei der Heizbalg in eine reifengemäße Torusform gebracht wird.

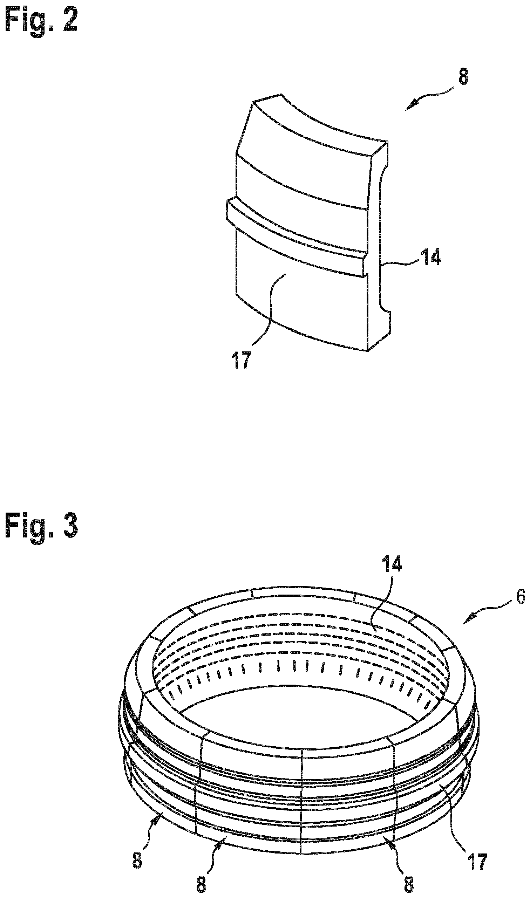

Fig. 2 zeigt ein Formsegment 8 in einer schematischen Schrägansicht, Fig. 3 auf ebenfalls schematische Weise eine Schrägansicht eines aus mehreren Formsegmenten 8 zusammengesetzten Segmentringes 6. Jedes Formsegment 8 weist eine dem Hohlraum 20 (Fig. 1) der Vulkanisationsform abgewandte Außenseite, die üblicherweise und nachfolgend als Segmentrücken 17 bezeichnet ist, auf, mit welchem das Formsegment 8 in einem Segmentschuh 7 der Vulkanisationsform angeordnet wird. Weiterhin weist jedes Formsegment 8 eine dem Hohlraum 20 der Vulkanisationsform zugewandte Formseite 14 auf, welche das Profilnegativ des Laufstreifens in Form von Rippen, Lamellen und dergleichen aufweist, wobei diese Elemente nicht dargestellt sind. Rippen formen in bekannter Weise Rillen im Laufstreifen, Lamellen in bekannter Weise Einschnitte.

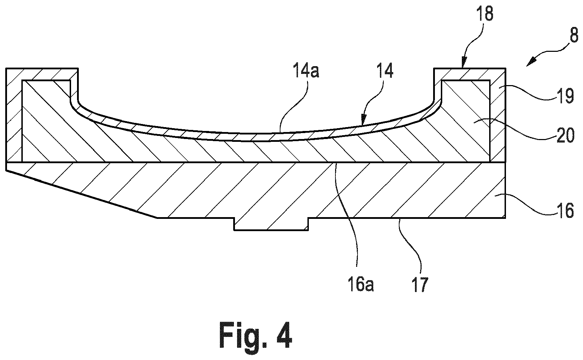

Fig. 4 zeigt einen Querschnitt durch ein Formsegment 8. Das Formsegment 8 besteht aus zwei Bereichen, ein den Segmentrücken 17 aufweisendes Formsegmentteil 16 und ein die Formseite 14 aufweisendes Formsegmentteil 18. Das Formsegmentteil 16 ist ein vorgefertigtes, insbesondere aus Stahl bestehendes Bauteil, welches bereits die Endkontur des Segmentrückens 17 aufweist. Die dem Segmentrücken 17 gegenüberliegende Fläche 16a des Formsegmentteils 16 ist bevorzugt plan ausgeführt. Auf diese Fläche 16a des Formsegmentteils 16 wird das Formsegmentteil 18 stoffschlüssig mittels eines generativen Fertigungsverfahrens unter Verwendung und Umschmelzen von Metallpulver, vorzugsweise mittels Laser, aufgebaut. Bei diesem als SLM- (Selective Laser-Melting) Verfahren bekannten Verfahren wird Metallpulver Schicht für Schicht aufgebracht und Schicht für Schicht geschmolzen, wodurch das Formsegmentteil 18 durch geschmolzenes und anschließend verfestigtes Metallpulver fest mit dem Formsegmentteil 16 verbunden und additiv aufgebaut wird. Dabei wird bevorzugt auch die Formseite 14 mit den darauf befindlichen Elementen, wie Rippen und Lamellen, etwaigen Abriebindikatoren und den vorgesehenen Symbolen, aufgebaut. Die erforderlichen Entlüftungskanäle bzw. Entlüftungsbohrungen werden bevorzugt nachträglich auf konventionelle Weise und automatisiert durch das fertige Formsegment 8 hindurch gebohrt.

Das Formsegmentteil 18 wird derart aufgebaut, dass es eine Außenschicht 19 aus solidem Material, also aus vollständig umgeschmolzenem Metallpulver, und einen porösen Innenbereich 20 aufweist. Unter einem vollständig umgeschmolzenen, soliden Material wird ein solches verstanden, welches eine Porosität (Verhältnis von Hohlraumvolumen zu Gesamtvolumen) ≤ 0,01 aufweist, wobei diese "Art" der Porosität aus nicht beabsichtigten Fehlstellen, also Gaseinschlüssen im Materialgefüge, besteht. Der Innenbereich 20 hingegen weist eine Porosität von 0,01 bis 0,5 auf, wobei der Innenbereich 20 Teilbereiche oder Teilvolumina aufweisen kann, die sich in ihrer Porosität voneinander unterscheiden. Die Porosität des Innenbereiches 20 bzw. von zumindest einem der vorgesehenen Teilbereiche beträgt insbesondere ≥ 0,03, vorzugsweise ≥ 0,07, besonders bevorzugt ≥ 0,1. Die Porengröße der Poren, ihr größter Durchmesser, beträgt maximal 1,0 mm. Dabei weist der Innenbereich 20, auch in ggf. vorgesehenen Teilbereichen mit unterschiedlicher Porosität, in stochastischer Homogenität angeordnete Poren auf, also Poren, die sich in einer gleichmäßigen Zufallsordnung befinden.

Die Außenschicht 19 wird zumindest an den Seiten- und den Stirnflächen des Formsegmentteils 18 mit einer konstanten oder einer variierenden Schichtdicke von 0,1 bis 3,0 mm gebildet. Die das Profilnegativ bildenden Formelemente, wie Rippen und Lamellen, werden bei einer möglichen Ausführung aus vollständig umgeschmolzenem Metallpulver aufgebaut, entlang der Innenfläche 14a der Formseite 14 - in den Bereichen zwischen den an der Formseite 14 vorstehenden, nicht dargestellten Rippen und Lamellen - beträgt die Schichtdicke bevorzugt ebenfalls 0,1 mm bis 3,0 mm. Bei einer alternativen Ausführung sind zumindest einige, bevorzugt sämtliche, der das Profilnegativ bildenden Elemente mit einer Außenschicht und einem Innenbereich ausgebildet, wobei dünne, beispielsweise 0,5 mm dicke, Lamellen auch aus solidem Material aufgebaut sein können.

### Bezugszeichenliste

- 1: untere Heizplatte
- 2: untere Seitenwandschale
- 3: obere Heizplatte
- 4: obere Seitenwandschale
- 5: unterer Wulstring
- 6: Segmentring
- 7: Segmentschuh
- 8: Formsegment
- 9: Schließring
- 10, 11: Heizkammer
- 12a, 12b, 12c: Heizkammer
- 14: Formseite
- 14a: Innenfläche
- 15: oberer Wulstring
- 16: Formsegmentteil
- 16a: Fläche
- 17: Segmentrücken
- 18: Formsegmentteil
- 19: Außenschicht
- 20: Innenbereich
- P₁: Doppelpfeil in axialer Richtung
- P₂: Doppelpfeil in radialer Richtung

## Patentansprüche

1. Verfahren zur Herstellung eines Formsegmentes (8) einer Vulkanisationsform für einen Fahrzeugreifen mit einem profilierten Laufstreifen,
wobei auf einer insbesondere planen Fläche (16a) eines durch ein nicht - generatives Fertigungsverfahren vorgefertigten ersten Formsegmentteils (16) mittels eines generativen Fertigungsverfahrens durch Umschmelzen von Metallpulver schichtweise ein weiteres Formsegmentteil (18) aufgebaut und mit dem ersten Formsegmentteil (16) stoffschlüssig verbunden wird,
wobei das weitere Formsegmentteil (18) mitsamt den das Profilnegativ des Laufstreifens des Fahrzeugreifens bildenden Elementen aufgebaut wird,
und wobei das weitere Formsegmentteil (18) mit einer Außenschicht (19) und einem an den ersten Formsegmentteil (16) angrenzenden Innenbereich (20) aufgebaut wird, wobei die Außenschicht (19) aus vollständig umgeschmolzenem Metallpulver aufgebaut wird und den Innenbereich (20) von außen umgibt,
**dadurch gekennzeichnet,**
**dass** der Innenbereich (20) zumindest teilweise mit einem Volumenenergieeintrag aufgebaut wird, welcher sich vom Volumenenergieeintrag beim Aufbau der Außenschicht (19) unterscheidet, derart, dass der Innenbereich (20) mit einer Porosität von 0,01 bis 0,5 gebildet wird.

2. Verfahren nach Anspruch 1, **dadurch gekennzeichnet, dass** der Innenbereich (20) zumindest teilweise mit einem geringeren Volumenenergieeintrag als die Außenschicht (19) aufgebaut wird.

3. Verfahren nach Anspruch 1, **dadurch gekennzeichnet, dass** der Innenbereich (20) zumindest teilweise mit einem höheren Volumenenergieeintrag als die Außenschicht (19) aufgebaut wird.

4. Verfahren nach einem der Ansprüche 1 bis 3, **dadurch gekennzeichnet, dass** der Innenbereich (20) mit in stochastischer Homogenität verteilten Poren aufgebaut wird.

5. Verfahren nach einem der Ansprüche 1 bis 4, **dadurch gekennzeichnet, dass** der Innenbereich (20) mit Poren aufgebaut wird, deren größter Durchmesser ≤ 1,0 mm beträgt.

6. Verfahren nach einem der Ansprüche 1 bis 5, **dadurch gekennzeichnet, dass** der Innenbereich (20) mit Teilbereichen aufgebaut wird, die sich in ihrer Porosität voneinander unterscheiden.

7. Verfahren nach einem der Ansprüche 1 bis 6, **dadurch gekennzeichnet, dass** der Innenbereich (20) bzw. zumindest ein Teilbereich des Innenbereiches (20) mit einer Porosität ≤ 0,5, insbesondere ≤ 0,3, aufgebaut wird.

8. Verfahren nach einem der Ansprüche 1 bis 7, **dadurch gekennzeichnet, dass** der Innenbereich (20) bzw. zumindest ein Teilbereich des Innenbereiches (20) mit einer Porosität ≥ 0,03, bevorzugt ≥ 0,07 und besonders bevorzugt ≥ 0,1 aufgebaut wird.

9. Verfahren nach Anspruch 1, **dadurch gekennzeichnet, dass** die Außenschicht (19) zumindest an den Seiten- und den Stirnflächen des Formsegmentes (8) in einer Schichtdicke von 0,1 mm bis 3,0 mm aufgebaut wird.

10. Verfahren nach einem der Ansprüche 1 bis 9, **dadurch gekennzeichnet, dass** die Elemente des Profilnegativs zumindest zum Teil aus solidem Material aufgebaut werden.

11. Verfahren nach einem der Ansprüche 1 bis 10, **dadurch gekennzeichnet, dass** die Elemente des Profilnegativs zumindest zum Teil derart aufgebaut werden, dass sie jeweils einen Teilbereich des Innenbereiches (20) aufweisen und eine Außenschicht mit einer Schichtdicke von 0,1 mm bis 3,0 mm aufweisen.

12. Verfahren nach einem der Ansprüche 1 bis 11, **dadurch gekennzeichnet, dass** die Außenschicht (19) an der die Elemente des Profilnegativs aufweisenden Innenfläche (14a) und in den Bereichen zwischen den Elementen des Profilnegativs mit einer Schichtdicke von 0,1 mm bis 3,0 mm aufgebaut wird.

13. Verfahren nach einem der Ansprüche 1 bis 12, **dadurch gekennzeichnet, dass** das erste Formsegmentteil (16) derart vorgefertigt wird, dass dieses die Form einer rechteckigen Platte oder die Form eines konturnahen Segmentrückens (17) oder die Endkontur eines Segmentrückens (17) aufweist, wobei auf der dem Segmentrücken (17) gegenüberliegenden Fläche das weitere Formsegmentteil (18) aufgebracht wird, wobei das erste Formsegmentteil (16) bei Form einer rechteckigen Platte oder bei konturnaher Form des Segmentrückens (17) zum Erhalt der Endkontur des Segmentrückens (17) nachbearbeitet wird.

14. Verfahren nach einem der Ansprüche 1 bis 13, **dadurch gekennzeichnet, dass** die dem Segmentrücken (17) gegenüberliegende Fläche des ersten Formsegmentteils (16) plan ausgeführt wird, wobei das weitere Formsegmentteil (18) auf die plane Fläche aufgebracht wird.

15. Verfahren nacheinem der Ansprüche 1 bis 14, **dadurch gekennzeichnet, dass** das Formsegment (8) spanend nachbearbeitet wird und/oder einem Wärme- und Oberflächenbehandlungsverfahren unterzogen wird.

16. Verfahren nach einem der Ansprüche 1 bis 15, **dadurch gekennzeichnet, dass** als generatives Verfahren zumindest eines der Verfahren aus der Gruppe Laserschmelzverfahren, Sinterverfahren, Auftragsschweißverfahren und sonstige Schmelzverfahren angewandt wird.

17. Formsegment (8) einer Vulkanisationsform für einen Fahrzeugreifen aus einem durch ein nicht -generatives Fertigungsverfahren hergestelltes, vorgefertigtes ersten Formsegmentteil (16) und einem mittels eines generativen Fertigungsverfahrens durch Umschmelzen von Metallpulver schichtweise aufgebauten weiterer Formsegmentteil (18), welches mit dem ersten Formsegmentteil (16) stoffschlüssig verbunden ist und mit den das Profilnegativ des Laufstreifens des Fahrzeugreifens bildenden Elementen versehen ist,
und wobei das weitere Formsegmentteil (18) eine Außenschicht (19) und einen an den ersten Formsegmentteil (16) angrenzenden Innenbereich (20) aufweist, wobei die Außenschicht (19) aus vollständig umgeschmolzenem Metallpulver besteht und den Innenbereich (20) von außen umgibt, **dadurch gekennzeichnet,**
**dass** der Innenbereich (20) eine Porosität von 0,01 bis 0,5 aufweist.

18. Formsegment nach Anspruch 17, **dadurch gekennzeichnet, dass** der Innenbereich (20) in stochastischer Homogenität verteilte Poren aufweist.

19. Formsegment nach Anspruch 17 oder 18, **dadurch gekennzeichnet, dass** der Innenbereich (20) Teilbereiche aufweist oder sich aus Teilbereichen zusammensetzt, die sich in ihrer Porosität voneinander unterscheiden.

20. Formsegment nach einem der Ansprüche 17 bis 19, **dadurch gekennzeichnet, dass** der Innenbereich bzw. zumindest ein Teilbereich des Innenbereiches (20) eine Porosität ≤ 0,3 aufweist.

21. Formsegment nach einem der Ansprüche 17 bis 20, **dadurch gekennzeichnet, dass** der Innenbereich (20) bzw. zumindest ein Teilbereich des Innenbereiches (20) eine Porosität ≥ 0,03, bevorzugt ≥ 0,07 und besonders bevorzugt ≥ 0,1 aufweist.

22. Formsegment nach einem der Ansprüche 17 bis 21, **dadurch gekennzeichnet, dass** die Poren im Innenbereich (20) einen größten Durchmesser ≤ 1,0 mm aufweisen.

23. Formsegment nach einem der Ansprüche 17 bis 22, **dadurch gekennzeichnet, dass** die Außenschicht (19) zumindest an den Seiten- und den Stirnflächen des Formsegmentes (8) eine Schichtdicke von 0,1 mm bis 3,0 mm aufweist.

24. Formsegment nach einem der Ansprüche 17 bis 23, **dadurch gekennzeichnet, dass** Elemente des Profilnegativs aus solidem Material bestehen.

25. Formsegment nach einem der Ansprüche 17 bis 24, **dadurch gekennzeichnet, dass** Elemente des Profilnegativs jeweils eine Außenschicht mit einer Schichtdicke von 0,1 mm bis 3,0 mm und einen zum Innenbereich (20) gehörenden Innenbereich aufweisen.

## Claims

1. Method for producing a mould segment (8) of a vulcanization mould for a vehicle tyre having a profiled tread, wherein, on an in particular planar surface (16a) of a first mould segment part (16) prefabricated by a non-generative manufacturing process, a further mould segment part (18) is built up in layers by means of a generative manufacturing process by melting metal powder and is materially bonded to the first mould segment part (16),
wherein the further mould segment part (18) is built up together with the elements forming the profile negative of the tread of the vehicle tyre,
and wherein the further mould segment part (18) is built up with an outer layer (19) and an inner region (20) adjoining the first mould segment part (16), wherein the outer layer (19) is built up from completely melted metal powder and surrounds the inner region (20) on the outside,
**characterized in that**
the inner region (20) is built up at least partially with a volumetric energy input which differs from the volumetric energy input during the build-up of the outer layer (19), in such a way that the inner region (20) is formed with a porosity of 0.01 to 0.5.

2. Method according to Claim 1, **characterized in that** the inner region (20) is built up at least partially with a lower volumetric energy input than the outer layer (19).

3. Method according to Claim 1, **characterized in that** the inner region (20) is built up at least partially with a higher volumetric energy input than the outer layer (19).

4. Method according to one of Claims 1 to 3, **characterized in that** the inner region (20) is built up with pores distributed with stochastic homogeneity.

5. Method according to one of Claims 1 to 4, **characterized in that** the inner region (20) is built up with pores, the largest diameter of which is ≤1.0 mm.

6. Method according to one of Claims 1 to 5, **characterized in that** the inner region (20) is built up with subregions which differ from one another in terms of their porosity.

7. Method according to one of Claims 1 to 6, **characterized in that** the inner region (20) or at least a subregion of the inner region (20) is built up with a porosity of ≤0.5, in particular ≤0.3.

8. Method according to one of Claims 1 to 7, **characterized in that** the inner region (20) or at least a subregion of the inner region (20) is built up with a porosity of ≥0.03, preferably ≥0.07 and particularly preferably ≥0.1.

9. Method according to Claim 1, **characterized in that** the outer layer (19) is built up in a layer thickness of 0.1 mm to 3.0 mm at least on the side and end faces of the mould segment (8).

10. Method according to one of Claims 1 to 9, **characterized in that** the elements of the profile negative are built up at least to some extent from solid material.

11. Method according to one of Claims 1 to 10, **characterized in that** the elements of the profile negative are built up at least to some extent in such a way that they each comprise a subregion of the inner region (20) and have an outer layer with a layer thickness of 0.1 mm to 3.0 mm.

12. Method according to one of Claims 1 to 11, **characterized in that** the outer layer (19) is built up with a layer thickness of 0.1 mm to 3.0 mm on the inner surface (14a) having the elements of the profile negative, and in the regions between the elements of the profile negative.

13. Method according to one of Claims 1 to 12, **characterized in that** the first mould segment part (16) is prefabricated in such a way that it has the form of a rectangular plate or the form of a near-net-shape segment spine (17) or the final contour of a segment spine (17), wherein the further mould segment part (18) is applied to the surface situated opposite the segment spine (17), wherein, when it is in the form of a rectangular plate or when it has the near-net shape of the segment spine (17), the first mould segment part (16) is reworked in order to obtain the final contour of the segment spine (17).

14. Method according to one of Claims 1 to 13, **characterized in that** the surface, situated opposite the segment spine (17), of the first mould segment part (16) has a planar design, wherein the further mould segment part (18) is applied to the planar surface.

15. Method according to one of Claims 1 to 14, **characterized in that** the mould segment (8) is reworked by machining and/or is subjected to a heat and surface treatment process.

16. Method according to one of Claims 1 to 15, **characterized in that** the generative process applied is at least one of the processes from the following group: laser melting process, sintering process, build-up welding process, and other melting processes.

17. Mould segment (8) of a vulcanization mould for a vehicle tyre, composed of a prefabricated first mould segment part (16), produced by a non-generative manufacturing process, and a further mould segment part (18) which is built up in layers by means of a generative manufacturing process by melting metal powder, is materially bonded to the first mould segment part (16), and is provided with the elements forming the profile negative of the tread of the vehicle tyre,
and wherein the further mould segment part (18) has an outer layer (19) and an inner region (20) adjoining the first mould segment part (16), wherein the outer layer (19) consists of completely melted metal powder and surrounds the inner region (20) on the outside,
**characterized in that**
the inner region (20) has a porosity of 0.01 to 0.5.

18. Mould segment according to Claim 17, **characterized in that** the inner region (20) has pores distributed with stochastic homogeneity.

19. Mould segment according to Claim 17 or 18, **characterized in that** the inner region (20) has subregions or is composed of subregions which differ from one another in terms of their porosity.

20. Mould segment according to one of Claims 17 to 19, **characterized in that** the inner region or at least a subregion of the inner region (20) has a porosity of ≤0.3.

21. Mould segment according to one of Claims 17 to 20, **characterized in that** the inner region (20) or at least a subregion of the inner region (20) has a porosity of ≥0.03, preferably ≥0.07 and particularly preferably ≥0.1.

22. Mould segment according to one of Claims 17 to 21, **characterized in that** the pores in the inner region (20) have a largest diameter of ≤1.0 mm.

23. Mould segment according to one of Claims 17 to 22, **characterized in that** the outer layer (19) has a layer thickness of 0.1 mm to 3.0 mm at least on the side and end faces of the mould segment (8).

24. Mould segment according to one of Claims 17 to 23, **characterized in that** elements of the profile negative consist of solid material.

25. Mould segment according to one of Claims 17 to 24, **characterized in that** elements of the profile negative each have an outer layer with a layer thickness of 0.1 mm to 3.0 mm and an inner region that is part of the inner region (20).

## Revendications

1. Procédé de fabrication d'un segment de moule (8) d'un moule de vulcanisation destiné à un pneumatique de véhicule pourvu d'une bande de roulement profilée, une partie de segment de moule supplémentaire (18) étant construite par couches au moyen d'un procédé de fabrication génératif par refusion de poudre métallique sur une surface (16a) notamment plane d'une première partie de segment de moule (16) préfabriquée par un procédé de fabrication non génératif, et étant liée à la première partie de segment de moule (16) par liaison de matière,
la partie de segment de moule supplémentaire (18) étant construite avec les éléments formant le profil négatif de la bande de roulement du pneumatique de véhicule, et
la partie de segment de moule supplémentaire (18) étant construite avec une couche extérieure (19) et une zone intérieure (20) contiguë à la première partie de segment de moule (16), la couche extérieure (19) étant construite à partir de poudre métallique complètement refondue et entourant la zone intérieure (20) depuis l'extérieur,
**caractérisé en ce que**
la zone intérieure (20) est au moins partiellement construite avec un apport d'énergie volumique qui diffère de l'apport d'énergie volumique lors de la construction de la couche extérieure (19) de manière à former la zone intérieure (20) avec une porosité de 0,01 à 0,5.

2. Procédé selon la revendication 1, **caractérisé en ce que** la zone intérieure (20) est au moins partiellement construite avec un apport d'énergie volumique plus faible que pour la couche extérieure (19).

3. Procédé selon la revendication 1, **caractérisé en ce que** la zone intérieure (20) est au moins partiellement construite avec un apport d'énergie volumique plus élevé que pour la couche extérieure (19).

4. Procédé selon l'une des revendications 1 à 3, **caractérisé en ce que** la zone intérieure (20) est construite avec des pores répartis en homogénéité stochastique.

5. Procédé selon l'une des revendications 1 à 4, **caractérisé en ce que** la zone intérieure (20) est construite avec des pores dont le plus grand diamètre est ≤ 1,0 mm.

6. Procédé selon l'une des revendications 1 à 5, **caractérisé en ce que** la zone intérieure (20) est construite avec des sous-zones qui diffèrent les unes des autres par leur porosité.

7. Procédé selon l'une des revendications 1 à 6, **caractérisé en ce que** la zone intérieure (20) ou au moins une sous-zone de la zone intérieure (20) est construite avec une porosité ≤ 0,5, notamment ≤ 0,3.

8. Procédé selon l'une des revendications 1 à 7, **caractérisé en ce que** la zone intérieure (20) ou au moins une sous-zone de la zone intérieure (20) est construite avec une porosité ≥ 0,03, de préférence ≥ 0,07 et de manière particulièrement préférée ≥ 0,1.

9. Procédé selon la revendication 1, **caractérisé en ce que** la couche extérieure (19) est construite au moins sur les surfaces latérales et frontales du segment de moule (8) avec une épaisseur de couche de 0,1 mm à 3,0 mm.

10. Procédé selon l'une des revendications 1 à 9, **caractérisé en ce que** les éléments du profilé négatif sont au moins en partie en une matière massive.

11. Procédé selon l'une des revendications 1 à 10, **caractérisé en ce que** les éléments du profilé négatif sont au moins partiellement construits de manière à comporter chacun une sous-zone de la zone intérieure (20) et une couche extérieure avec une épaisseur de couche de 0,1 mm à 3,0 mm.

12. Procédé selon l'une des revendications 1 à 11, **caractérisé en ce que** la couche extérieure (19) sur la surface intérieure (14a), qui comporte les éléments du profilé négatif, et dans les zones situées entre les éléments du profilé négatif est construite avec une épaisseur de couche de 0,1 mm à 3,0 mm.

13. Procédé selon l'une des revendications 1 à 12, **caractérisé en ce que** la première partie de segment de moule (16) est préfabriquée de manière à avoir la forme d'une plaque rectangulaire ou la forme d'un dos de segment à contour proche (17) ou le contour définitif d'un dos de segment (17), la partie de segment de moule supplémentaire (18) étant appliquée sur la surface opposée au dos de segment (17), la première partie de segment de moule (16) étant retravaillée dans le cas de la forme d'une plaque rectangulaire ou dans le cas d'une forme proche du contour du dos de segment (17) afin d'obtenir le contour définitif du dos de segment (17).

14. Procédé selon l'une des revendications 1 à 13, **caractérisé en ce que** la surface de la première partie de segment de moule (16) qui est opposée au dos de segment (17) est plane, la partie de segment de moule supplémentaire (18) étant appliquée sur la surface plane.

15. Procédé selon l'une des revendications 1 à 14, **caractérisé en ce que** le segment de moule (8) est soumis à un usinage ultérieur et/ou à un procédé de traitement thermique et de surface.

16. Procédé selon l'une des revendications 1 à 15, **caractérisé en ce que** l'un au moins des procédés du groupe comprenant un procédé de fusion laser, un procédé de frittage, un procédé de rechargement par soudure et d'autres procédés de fusion est utilisé comme procédé génératif.

17. Segment de moule (8) d'un moule de vulcanisation destiné à un pneumatique de véhicule, ledit segment de moule comprenant une première partie de segment de moule (16) préfabriqué, qui a été fabriqué par un procédé de fabrication non-génératif, et une partie de segment de moule supplémentaire (18) qui a été construite par couches par refusion de poudre métallique au moyen d'un procédé de fabrication génératif, qui est reliée par liaison de matière à la première partie de segment de moule (16) et qui est pourvue des éléments formant le profilé négatif de la bande de roulement du pneumatique de véhicule,
et
la partie de segment de moule supplémentaire (18) comportant une couche extérieure (19) et une zone intérieure (20) contiguë à la première partie de segment de moule (16), la couche extérieure (19) comprenant de la poudre métallique complètement refondue et entourant la zone intérieure (20) depuis l'extérieur,
**caractérisé en ce que**
la zone intérieure (20) a une porosité de 0,01 à 0,5.

18. Segment de moule selon la revendication 17, **caractérisé en ce que** la zone intérieure (20) comporte des pores répartis suivant une homogénéité stochastique.

19. Segment de moule selon la revendication 17 ou 18, **caractérisé en ce que** la zone intérieure (20) comporte des sous-zones ou est composée de sous-zones qui diffèrent les unes des autres par leur porosité.

20. Segment de moule selon l'une des revendications 17 à 19, **caractérisé en ce que** la zone intérieure ou au moins une sous-zone de la zone intérieure (20) présente une porosité ≤ 0,3.

21. Segment de moule selon l'une des revendications 17 à 20, **caractérisé en ce que** la zone intérieure (20) ou au moins une sous-zone de la zone intérieure (20) présente une porosité ≥ 0,03, de préférence ≥ 0,07 et de manière particulièrement préférée ≥ 0,1.

22. Segment de moule selon l'une des revendications 17 à 21, **caractérisé en ce que** les pores de la zone intérieure (20) ont un diamètre maximum ≤ 1,0 mm.

23. Segment de moule selon l'une des revendications 17 à 22, **caractérisé en ce que** la couche extérieure (19) a une épaisseur de couche de 0,1 mm à 3,0 mm au moins sur les surfaces latérales et frontales du segment de moule (8).

24. Segment de moule selon l'une des revendications 17 à 23, **caractérisé en ce que** les éléments du profilé négatif sont en une matière massive.

25. Segment de moule selon l'une des revendications 17 à 24, **caractérisé en ce que** les éléments du profilé négatif comportent chacun une couche extérieure d'une épaisseur de couche de 0,1 mm à 3,0 mm et une zone intérieure appartenant à la zone intérieure (20).
